(19) Europäisches Patentamt / European Patent Office / Office européen des brevets

(11) **EP 4 787 565 A1**

(12) **EUROPEAN PATENT APPLICATION**
published in accordance with Art. 153(4) EPC

(43) Date of publication:
05.08.2026  Bulletin 2026/32

(21) Application number: 25867313.6

(22) Date of filing: 18.06.2025

(51) International Patent Classification (IPC):
*H01M 50/167* (2021.01)   *G01B 7/02* (2006.01)
*B21D 51/26* (2006.01)   *H01M 10/04* (2006.01)

(52) Cooperative Patent Classification (CPC):
**B21D 51/26; G01B 7/02; H01M 10/04;**
**H01M 50/167;** Y02E 60/10; Y02P 70/50

(86) International application number:
**PCT/KR2025/008391**

(87) International publication number:
**WO 2026/111070 (28.05.2026 Gazette 2026/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 21.11.2024  KR 20240167132

(71) Applicant: **LG ENERGY SOLUTION, LTD.**
**Seoul 07335 (KR)**

(72) Inventor: **YOON, Heemin**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **BATTERY BEADING DEVICE AND METHOD FOR MANUFACTURING BATTERY CASE BY USING SAME**

(57)    The present invention relates to a battery beading device including: a fixing part inserted into an opening portion of a battery case and configured to fix the battery case; a beading part including a knife configured to form a bead by pressing an outer surface of the battery case, a main body configured to allow the knife to move forward or backward, and a connection portion configured to connect the knife and the main body; and a distance calculation unit configured to calculate a distance between at least one of the fixing part and the main body and the connection portion.

[Figure 1]

Processed by Luminess, 75001 PARIS (FR)

## Description

[Technical Field]

This application claims priority to and the benefit of Korean Patent Application No. 10-2024-0167132 filed in the Korean Intellectual Property Office on November 21, 2024, the entire contents of which are incorporated herein by reference.

The present invention relates to a battery beading device, and a method for manufacturing a battery case using the same. Specifically, the present invention relates to a battery beading device capable of maintaining consistent quality of secondary batteries, and a method for manufacturing a battery case using the same.

[Background Art]

Typically, a secondary battery includes a positive electrode, a negative electrode, and an electrolyte, and generates electrical energy using a chemical reaction. The use of secondary batteries is gradually increasing due to their advantage of rechargeability. Among these secondary batteries, lithium secondary batteries have a high energy density per unit weight, so they are widely used as power sources for electronic communication devices and as drive sources for high-power hybrid vehicles, and electric vehicles.

In terms of the shape of these secondary batteries, there is an increasing demand for prismatic and pouch-type secondary batteries, which can be applied to products such as mobile phones due to their small thickness. In terms of the material of the secondary batteries, there is an increasing demand for lithium secondary batteries such as lithium-ion batteries and lithium-ion polymer batteries with high energy density, discharge voltage, and output stability.

Examples of secondary batteries that are widely used at present include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.5 V. Therefore, when a higher output voltage is required, a plurality of battery cells may be connected in series to configure a battery pack. In addition, a plurality of battery cells may be connected in parallel to configure a battery pack according to the charge/discharge capacity required for a battery pack. Accordingly, the number of battery cells included in the battery pack and their electrical connection configuration can be set in various ways depending on the required output voltage and/or charge/discharge capacity.

Note that known types of unit secondary battery cells include cylindrical, square, and pouch-type battery cells. In the case of a cylindrical battery cell, a separator, which is an insulator, is interposed between a positive electrode sheet and a negative electrode sheet, and the resultant laminate is wound into a cylindrical shape to form a jelly roll-type electrode assembly. The electrode assembly is inserted into a battery case, and a disc-shaped upper insulating member is attached to an upper side of the electrode assembly.

The battery case in which the electrode assembly and the upper insulating member are accommodated is formed with an inwardly concave circular groove at its opening portion by a battery beading device. After an electrolyte solution is injected into the battery case, a cap assembly is located on an upper side of a beading part and the opening portion of the battery case is bent inwardly. Accordingly, the cap assembly seals the opening portion of the battery case, thereby manufacturing a secondary battery.

If the force applied to the battery case during the beading process can be accurately known, the quality can be predicted and a drive motor can be properly compensated. However, since the beading device of the related art does not include a means for directly measuring the force applied to the battery case, the force applied to the battery case is indirectly estimated by measuring a load of a drive motor (not illustrated) for driving the device main body. However, since the load of the drive motor can change due to various variables of the beading device, there is a limitation in precisely measuring the force directly applied to the battery case.

Therefore, there is a need for the development of a new battery beading device that can solve the problems described above.

[Detailed Description of the Invention]

[Technical Problem]

In view of the problems of the related art described above, the present invention is intended to provide a battery beading device capable of predicting a battery quality by maintaining a constant pressure applied to a battery case during a beading process, and a method for manufacturing a battery case using the same.

[Technical Solution]

An exemplary embodiment of the present invention provides a battery beading device including: a fixing part inserted into an opening portion of a battery case and configured to fix the battery case; a beading part including a knife configured to form a bead by pressing an outer surface of the battery case, a main body configured to allow the knife to move forward or backward, and a connection portion configured to connect the knife and the main body; and a distance calculation unit configured to calculate a distance between the knife and the fixing part or a distance between the knife and the main body.

An exemplary embodiment of the present invention provides a method for manufacturing a battery case by forming a bead on the battery case using the battery beading device described above, the method including: introducing a fixing part into an opening portion of the battery case and fixing a secondary battery to the fixing part; advancing, by a main body coupled to a knife, the knife in a direction in which the battery case is located, thereby pressing an outer surface of the battery case with the knife; calculating a distance between the knife and the fixing part or a distance between the knife and the main body; and rotating the fixing part to form a bead on the battery case.

An exemplary embodiment of the present invention provides a method for manufacturing a secondary battery, the method including: preparing a battery case manufactured by the method for manufacturing the battery case, and manufacturing a secondary battery by seating a cap assembly on the bead and then crimping the battery case.

[Advantageous Effects]

A battery beading device and a method for manufacturing a battery case using the same according to an exemplary embodiment of the present invention can prevent defects from occurring in a secondary battery, even when external conditions change, by maintaining a constant pressure applied to a battery case during a beading process.

[Brief Description of Drawings]

FIG. 1 is a cross-sectional view schematically illustrating a battery beading device according to an exemplary embodiment of the present invention.
FIG. 2 is a diagram illustrating an operation process of the battery beading device according to the exemplary embodiment of the present invention.
FIG. 3 is a perspective view illustrating a battery beading device according to another exemplary embodiment of the present invention.
FIG. 4 is a perspective view illustrating a battery beading device according to still another exemplary embodiment of the present invention.
FIG. 5 is a flow chart showing a method for manufacturing a battery case according to an exemplary embodiment of the present invention.

<Explanation of Reference Numerals and Symbols>

| | |
|---|---|
| 100: | battery beading device |
| 110: | fixing part |
| 111: | accommodation groove |
| 120: | beading part |
| 121: | main body |
| 121a: | first main body |

| | |
|---|---|
| 121b: | second main body |
| 122: | knife |
| 123: | connection portion |
| 130: | distance calculation unit |
| 131: | first coil |
| 132: | second coil |

[Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be presented and described in detail in the detailed description. However, this is not intended to limit the scope of the invention to the exemplary embodiments, and it should be understood that all modifications, equivalents, or substitutes that fall within the spirit and technical scope of the present invention are encompassed thereby.

Hereinafter, the present invention will be described in detail with reference to the drawings. However, it should be noted that the drawings are provided for illustrating the present invention, and the scope of the present invention is not limited by the drawings.

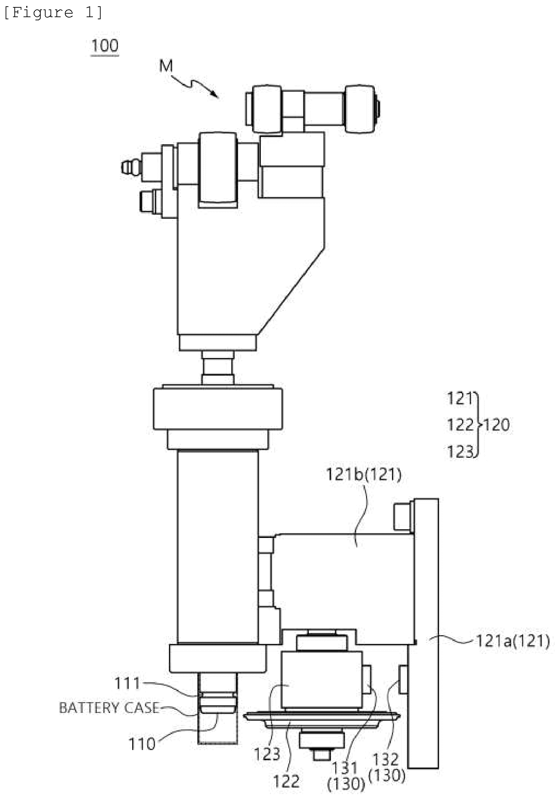

FIG. 1 is a cross-sectional view schematically illustrating a battery beading device 100 according to an exemplary embodiment of the present invention.

The battery beading device 100 according to the exemplary embodiment of the present invention includes a fixing part 110, a beading part 120, and a distance calculation unit 130.

The fixing part 110 is configured to fix a secondary battery 1. In this case, the secondary battery 1 may be in a state before a bead and a crimp are formed. Specifically, the secondary battery 1 may include an electrode assembly and a battery case accommodating the electrode assembly and having an opening portion formed on one side. Additionally, the secondary battery 1 may include an insulating member located on an upper surface of the electrode assembly. Here, the upper surface of the electrode assembly refers to one of two opposite surfaces of the electrode assembly, which is located on the opening side of the battery case.

In an exemplary embodiment, the fixing part 110 may be provided with an accommodation groove 111 on a part of a side surface. The accommodation groove 111 may be provided at a position corresponding to a position of a knife 122 described below, and may include a space that can accommodate the knife 122 when the knife 122 presses the battery case to form a bead. That is, the accommodation groove 111 may be formed to have the same depth as a recessed depth of a bead formed by the battery beading device 100.

The fixing part 110 may be provided in the same shape as the battery case. For example, when a battery case 200 is cylindrical, the fixing part 110 may also be provided in a cylindrical shape. A height of the fixing part 110 may correspond to a distance from the opening portion of the battery case to the upper surface of the insulating member. In other words, the fixing part 110 may be inserted into the opening portion of the battery case to press the insulating member.

A diameter or width of the fixing part 110 may be equal to or smaller than a diameter or width of the battery case. That is, an outer diameter of the fixing part 110 based on an outer surface of the fixing part 110 may be equal to or smaller than an inner diameter of the battery case based on an inner surface of the battery case. Preferably, the outer diameter of the fixing part 110 may be the same as the inner diameter of the battery case, and the outer surface of the fixing part 110 may come into contact with the inner surface of the battery case to fix the secondary battery 1.

In an exemplary embodiment, the fixing part 110 may be adjusted in diameter or width. The fixing part 110 may be configured such that the diameter is reduced when it is introduced into the battery case. When the fixing part 110 comes into contact with the insulating member, its diameter may be increased to fix the secondary battery 1.

In another exemplary embodiment, the fixing part 110 may include a fixing groove (not illustrated). The fixing groove may be located on an upper portion of the accommodation groove 111. The fixing groove may fix an end portion of the battery case. Therefore, a width of the fixing groove may be the same as a thickness of the battery case, and the end portion of the battery case may be fitted and fixed in the fixing groove. In this case, the outer diameter of the fixing part 110 may be smaller than the inner diameter of the battery case.

In still another exemplary embodiment, the fixing part 110 may include both the fixing part 110 according to the exemplary embodiment and the fixing part 110 according to another exemplary embodiment. Once an end portion of the battery case is fitted and fixed in the fixing groove, the fixing part 110 may increase in diameter, thereby doubly fixing the secondary battery 1.

The fixing part 110 may include an elastic material. The inclusion of an elastic material in the fixing part 110 makes it possible to prevent generation of metal foreign matter from the battery case when the fixing part 110 rubs against the battery case or presses the battery case. The inclusion of an elastic material in the fixing part 110 makes it possible to prevent deformation of the battery case when the fixing part 110 presses and fixes the battery case. Preferably, the fixing part 110 may include stainless steel.

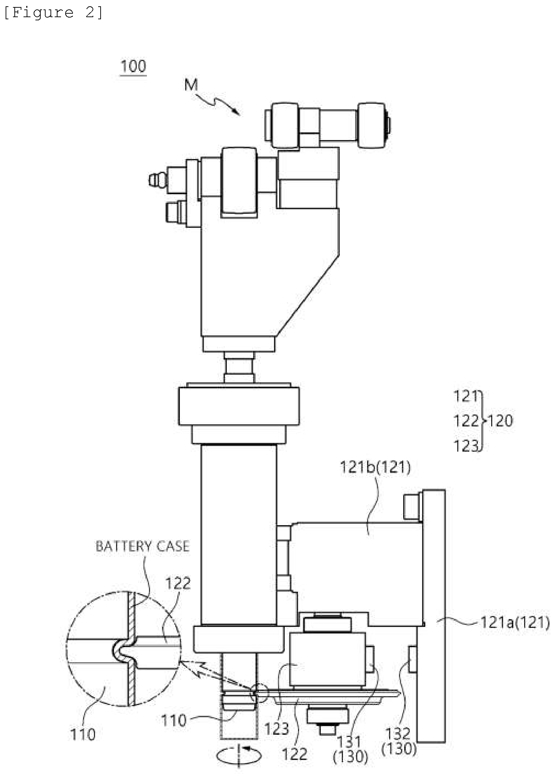

FIG. 2 is a diagram illustrating an operation process of the battery beading device according to the exemplary embodiment of the present invention.

The fixing part 110 may be configured to be rotatable. The battery beading device 100 according to the exemplary embodiment of the present invention may form a bead on the outer surface of the battery case by pressing the knife 122 against the outer surface of the battery case and rotating the fixing part 110.

The beading part 120 includes a main body 121, the knife 122, and a connection portion 123.

The main body 121 fixes a position of the beading part 120 and controls movement of the knife 122. In an exemplary embodiment, the main body 121 may include a first main body 121a having a pillar shape and a second main body 121b that adjusts a distance between the knife 122 and the fixing part 110.

The connection portion 123 may be coupled to the second main body 121b. One side of the connection portion 123 may be coupled to the second main body 121b, and the other side may be coupled to the knife 122. The connection portion 123 may move the knife 122 by receiving power from the outside via the second main body 121b.

In an exemplary embodiment, a rail may be located on one side of the second main body 121b to which the connection portion 123 is coupled. The connection portion 123 may be coupled to the rail to move the knife 122 in a direction in which the fixing part 110 is located or in a direction in which the first main body 121a is located.

The connection portion 123 may be configured to be attachable to and detachable from the second main body 121b. Therefore, when replacement or maintenance of the knife 122 is required, the replacement or maintenance work can be easily performed by separating only the connection portion 123, rather than replacing the entire beading part 120 or separating the beading part 120 from the battery beading device 100.

The knife 122 forms a bead on the battery case, and may be provided in the form of a disc, a roller, or a rod.

The knife 122 may form a bead on the outer surface of the battery case by pressing the outer surface of the battery case with a predetermined pressure and rotating. The battery case may be provided in the form of a metal can, and the knife 122 may be made of a metal material having a higher strength than that of the metal can. For example, the knife 122 may be made of stainless steel.

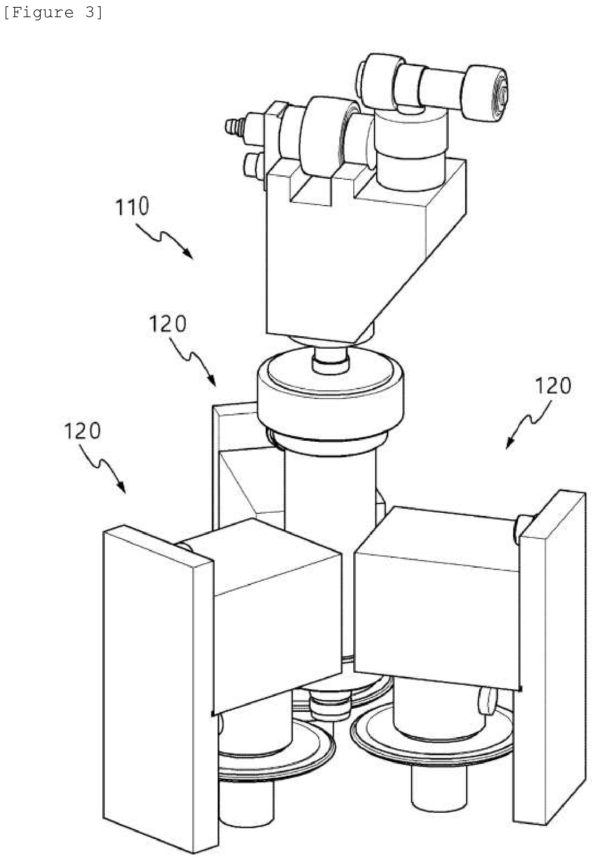

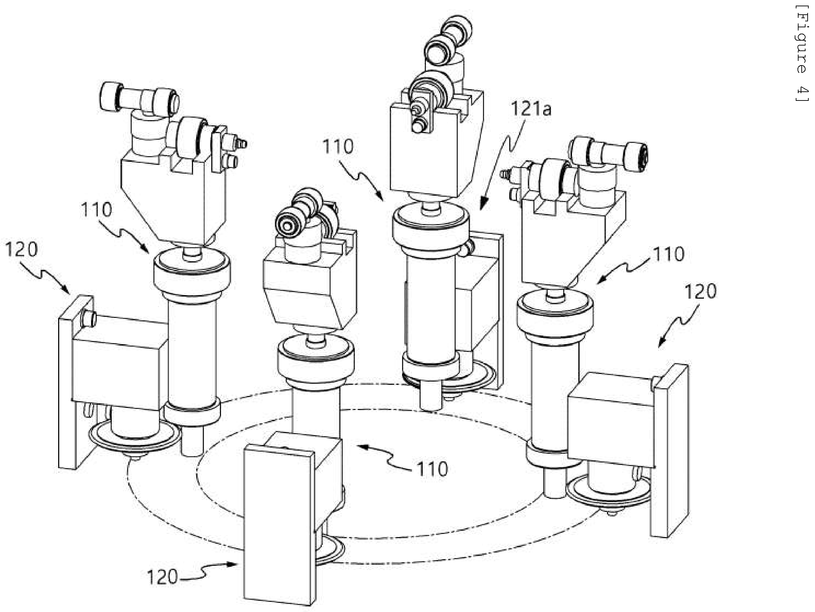

FIG. 3 is a perspective view illustrating a battery beading device according to another exemplary embodiment of the present invention, and FIG. 4 is a perspective view illustrating a battery beading device according to still another exemplary embodiment of the present invention.

Referring to FIG. 3, a plurality of beading parts 120 may be provided around the fixing part 110. As the plurality of beading parts 120 are provided, the bead forming time can be shortened.

Referring to FIG. 4, the battery beading device 100 according to an exemplary embodiment of the present invention may include a plurality of fixing parts 110 and a plurality of beading parts 120. Therefore, the manufacturing time of battery cases can be shortened by forming beads on a plurality of battery cases at once using the beading parts 120.

The distance calculation unit 130 may be provided as a pair and calculate a distance between the connection portion 123 and the fixing part 110 or a distance between the connection portion 123 and the main body 121.

In an exemplary embodiment, the distance calculation unit 130 may include a first coil 131, a second coil 132, a current supply unit (not illustrated), and a magnetic field measurement unit (not illustrated).

The first coil 131 may be fixed to a side surface of the connection portion 123, and the second coil 132 may be fixed to a side surface of at least one of the fixing part 110 and the main body 121. In this case, it is preferable that the first coil 131 and the second coil 132 are located facing each other.

The current supply unit may be connected to the first coil 131 and the second coil 132 to supply current such that a magnetic field can be formed between the first coil 131 and the second coil 132. The magnetic field measurement unit may be connected to either the first coil 131 or the second coil 132 to measure and display a magnetic field between the first coil 131 and the second coil 132. In this case, the main body 121 may be the first main body 121a.

The distance calculation unit 130 may detect changes in magnetic fields of the first coil 131 and the second coil 132 to calculate the distance between the connection portion 123 and the fixing part 110 or the distance between the connection portion 123 and the first main body 121a.

In an exemplary embodiment, the first coil 131 and the second coil 132 may be Helmholtz coils. Therefore, the first coil 131 and the second coil 132 may have the same size, radius, and diameter.

Specifically, the same current flows through the first coil 131 and the second coil 132, and a magnetic field (B) between the two coils depends only on a distance (R) between the two coils. Accordingly, when the distance between the first coil 131 and the second coil 132 changes with the movement of the connection portion 123, a magnetic field between the two coils is output to the magnetic field measurement unit, and the output magnetic field value may be substituted into Equation 1 below to inversely calculate a distance value between the first coil 131 and the second coil 132.

[Equation 1]

$$B = \left(\frac{4}{5}\right)^{3/2} \frac{\mu_0 n I}{R}$$

$\mu_0$ = magnetic field permeability coefficient in air
n = number of turns of wire in coil
I = current
R = distance between two coils

The battery beading device 100 according to an exemplary embodiment of the present invention may further include a control unit (not illustrated). The control unit may store reference values for a magnetic field measured by the magnetic field measurement unit and a movement distance of the connection portion 123 measured by the distance calculation unit, and may adjust a distance between the connection portion 123 and the knife 122 based on the reference values.

For example, the first coil 131 may be located on a side surface of the connection portion 123, and the second coil 132 may be located on a side surface of the first main body 121a. The distance between the connection portion 123 and the first main body 121a may be the same as radii of the first coil 131 and the second coil 132. When the knife 122 moves in the direction in which the fixing part 110 is located so as to form a bead on the battery case, the magnetic field measurement unit measures a magnetic field between the first coil 131 and the second coil 132.

In the case of a Helmholtz coil, a magnetic field may increase when the two coils come closer together (when the distance between the two coils decreases). The distance calculation unit 130 may receive the magnetic field value measured by the magnetic field measurement unit and calculate a distance between the two coils, and the control unit may receive the data calculated by the distance calculation unit and compares the data with a reference value. If the calculated distance exceeds the reference value, the control unit may reduce the movement distance of the connection portion 123, i.e., move the connection portion 123 backward. If the calculated distance falls below the reference value, the control unit may increase the movement distance of the connection portion 123, i.e., may further advance the connection portion 123. In this case, the movement distance is a distance that the connection portion 123 has advanced, and refer to a distance obtained by subtracting an initial distance ($r_0$) between the connection portion 123 and the main body 121 from a distance ($r_1$) calculated by the distance calculation unit 130.

Alternatively, the distance calculation unit 130 may include a movement distance calculation unit that calculates the movement distance of the connection portion 123. The movement distance calculation unit may receive the magnetic field value measured by the magnetic field measurement unit and calculate the movement distance of the connection unit 123, and the control unit may automatically adjust the movement distance of the connection portion 123 using the measured magnetic field and movement distance.

In this case, the reference value may be at least one of a magnetic field and a movement distance set by a user.

If the magnetic field measured by the magnetic field measurement unit falls below the reference value, it means that the distance between the connection portion 123 and the fixing part 110 is close, and the pressure applied by the knife 122 to the battery case is high, resulting in a bead defect. Accordingly, if the measured magnetic field falls below the reference value, the control unit may determine that the secondary battery 1 is defective, and may adjust the movement distance of the connection portion 123.

If the magnetic field measured by the magnetic field measurement unit exceeds the reference value, it means that the distance between the connection portion 123 and the fixing part 110 is far, and the control unit may further move the connection portion 123 toward the fixing part 110.

Alternatively, when the knife 122 moves in the direction in which the fixing part 110 is located so as to form a bead on the battery case, the distance between the connection portion 123 and the first main body 121a may be the same as the radii of the first coil 131 and the second coil 132. That is, when the battery beading device 100 is not operating, the magnetic field between the first coil 131 and the second coil 132 may be set as a first reference value, and when a normal bead is formed, the magnetic field may be set as a second reference value.

If the magnetic field measured by the magnetic field measurement unit falls below the second reference value, the control unit may determine that the secondary battery 1 is defective, and may adjust the movement distance of the connection portion 123. If the magnetic field measured by the magnetic field measurement unit does not reach the second reference value, the control unit may further move the connection portion 123 toward the fixing part 110.

A method for manufacturing a battery case according to an exemplary embodiment of the present invention will be briefly described.

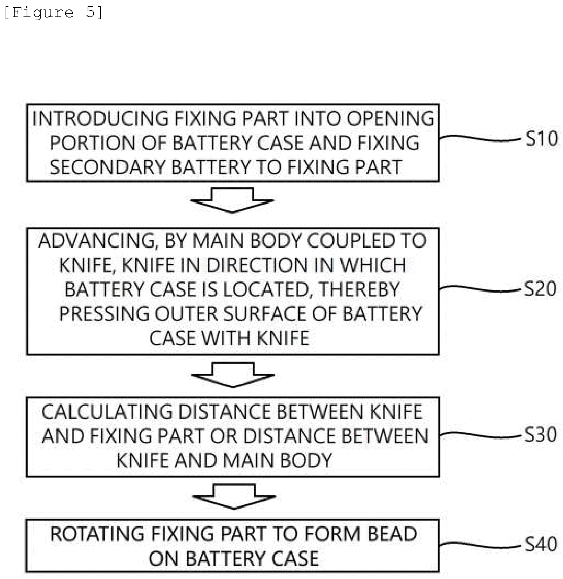

FIG. 5 is a flow chart showing a method for manufacturing a battery case according to an exemplary embodiment of the present invention.

A method for manufacturing a battery case according to an exemplary embodiment of the present invention may be performed using the battery beading device 100 according to the exemplary embodiment of the present invention described above.

The method for manufacturing a battery case includes the steps of: introducing a fixing part into an opening portion of a battery case and fixing a secondary battery to the fixing part (S10); advancing, by a main body coupled to a knife, the knife in a direction in which the battery case is located, thereby pressing an outer surface of the battery case with the knife (S20); calculating a distance between the knife and the fixing part or a distance between the knife and the main body (S30); and rotating the fixing part to form a bead on the battery case (S40).

The method for manufacturing a battery case according to an exemplary embodiment of the present invention may form beads on a plurality of secondary batteries by repeating S10 to S40.

The step (S30) of calculating the distance involves estimating a pressure applied by the knife to the battery case by measuring a change in magnetic field between a connection portion and a first main body. If the measured magnetic field is less than or greater than a reference value, the control unit may adjust a movement distance of the knife.

In an exemplary embodiment, the method for manufacturing a battery case according to an exemplary embodiment of the present invention may include a step (S00) of setting, by a user, a magnetic field between a connection portion and a first main body or a movement distance of the connection portion.

If the connection portion moves more or less than the movement distance set in the step S00 due to an overload of a motor for supplying power to the battery beading device or other external factors, the movement distance of the connection portion may be adjusted in the step of calculating the distance (S30).

At this time, the step of calculating the distance (S30) may include a step (S31) of measuring magnetic fields between a first coil and a second coil located between the connection portion and the first main body, a step (S32) of comparing the measured magnetic fields with a reference value stored in advance in the control unit, and a step (S33) of adjusting the movement distance of the connection portion if the measured magnetic fields are above or below the reference value.

Specifically, the step (S33) of adjusting the movement distance of the connection portion may involve further moving the connection portion in the direction in which the fixing part is located by determining that the pressure applied by the knife to the battery case falls below a reference value when the measured magnetic fields are above the reference value.

Alternatively, the step (S33) of adjusting the movement distance of the connection portion may involve determining that the pressure applied by the knife to the battery case exceeds the reference value when the measured magnetic fields are below the reference value, and adjusting the movement distance of the connection portion to be shorter in a next cycle.

The step (S40) of forming a bead may involve rotating not only the fixing part but also the knife.

A method for manufacturing a battery case according to an exemplary embodiment of the present invention may include the steps of manufacturing an electrode assembly by winding a negative electrode, a separator, and a positive electrode, and introducing the electrode assembly and an electrolyte solution into a battery case. The step of manufacturing an electrode assembly and the introducing step may be performed before the step (S10) of fixing a secondary battery to the fixing part.

The electrode assembly is a power generation element capable of charging and discharging and including a positive electrode, a negative electrode, and one or two separators.

The electrode assembly may include a jelly roll structure in which a first separator, a negative electrode, a second separator, and a positive electrode are sequentially stacked, or supplied to a core and wound thereon. Alternatively, the electrode assembly may include a jelly roll structure in which a negative electrode, a first separator, a positive electrode, and a second separator are sequentially stacked, or supplied to a core and wound thereon.

The electrode assembly may include a hollow portion located on a winding axis of the electrode assembly. The hollow portion may be formed by winding a positive electrode, a negative electrode, and a separator onto a core and then removing the core. The electrode assembly may have the hollow portion that may be empty or accommodate a center pin (not illustrated).

The center pin can prevent a core portion from being deformed or collapsed due to expansion and contraction of the electrode assembly. Here, the core portion may mean the hollow portion, or a region including the hollow portion and a portion of the wound negative electrode, first separator, positive electrode, and second separator adjacent to the hollow portion.

The positive electrode may include a positive electrode active material portion and a positive electrode uncoated portion. Specifically, the positive electrode includes a positive electrode active material coated on one or more of both surfaces of a positive electrode current collector, a region where the positive electrode active material is coated is a positive electrode active material portion, and a region where the positive electrode active material is not coated is a positive electrode uncoated portion.

The positive electrode uncoated portion is a portion of the positive electrode current collector exposed to the outside, and the positive electrode uncoated portion and the positive electrode current collector may be made of the same material. For example, the positive electrode current collector and the positive electrode uncoated portion may each be made of a metal foil having excellent conductivity, that is, the positive electrode current collector and the positive electrode uncoated portion may include an aluminum (Al) foil.

The positive electrode uncoated portion is a region where the positive electrode active material is not applied and a first electrode tab is located, thereby allowing the positive electrode and a cap assembly described below to be electrically connected. For example, the first electrode tab may be joined to the positive electrode uncoated portion by welding.

The positive electrode active material may include a lithium cobalt oxide with a high operating voltage and excellent capacity characteristics, a lithium nickel oxide with a high reversible capacity and used to easily implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode may include a negative electrode active material portion and a negative electrode uncoated portion. Specifically, the negative electrode includes a negative electrode active material coated on one surface or both surfaces of a negative electrode current collector, the negative electrode active material portion is formed by coating or applying the negative electrode active material, and the negative electrode uncoated portion is a region where the negative electrode active material is not coated or applied and the negative electrode current collector is exposed. For example, the negative electrode current collector and the negative electrode uncoated portion may each include a metal foil having excellent conductivity, that is, the negative electrode current collector and the negative electrode uncoated portion may include a copper (Cu) or nickel (Ni) foil.

The negative electrode uncoated portion is a region where the negative electrode active material is not applied and a second electrode tab is located, thereby allowing the negative electrode and a case described below to be electrically connected. For example, the second electrode tab and the negative electrode uncoated portion may be joined by welding the second electrode tab to the negative electrode uncoated portion.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The first electrode tab and the second electrode tab serve to transfer electrons collected in the current collectors to an external circuit, and may protrude in opposite directions with respect to the electrode assembly of the jelly-roll structure.

The separator serves to prevent an internal short circuit that may be generated when the positive electrode and the negative electrode come into contact with each other, and may include a porous material to facilitate migration of ions between the electrodes.

In an exemplary embodiment, the separator may include a base material layer made of a porous material. The base material layer may include, for example, any one selected from the group consisting of polyethylene (PE), polystyrene (PS), polypropylene (PP), polyimide (PI), and copolymers of polyethylene (PE) and polypropylene (PP).

Preferably, the base material layer may include any one of polyethylene (PE), polystyrene (PS), polypropylene (PP), and polyimide (PI), and more preferably, any one of polyethylene (PE), polypropylene (PP), and polyimide (PI).

In another exemplary embodiment, the separator may include a safety reinforced separator (SRS). That is, the separator may include a base material layer made of a porous material and a coating layer coated and formed on the base material layer by applying mixed slurry of inorganic particles and a binder polymer. Preferably, the coating layer includes ceramic particles and has a uniform pore structure formed by an interstitial volume between the ceramic particles that are a component of an active layer, in addition to a pore structure included in the separator base material itself.

The coating layer may include ceramic particles including at least one selected from the group consisting of alumina, silica, $TiO_2$, SiC, and $MgAl_2O_4$. Such a coating layer is included, so that the safety of the electrode assembly can be enhanced. The coating layer may further include a lithium salt.

A method for manufacturing a battery case may incorporate by reference the description of overlapping configurations in the battery beading device.

A method for manufacturing a secondary battery according to an exemplary embodiment of the present invention includes the steps of preparing a battery case, and manufacturing a secondary battery by seating a cap assembly on a bead and then crimping the battery case.

In this case, in the step of preparing a battery case, the battery case may be manufactured by the above method for manufacturing a battery case.

The cap assembly may be coupled to an opening surface of the battery case, and may include a top cap, a safety vent, and a current-blocking element.

Although the present invention has been described with reference to preferred exemplary embodiments, it will be understood by one skilled in the art that various modifications and variations can be made to the present invention without departing from the technical spirit and scope of the present invention.

**Claims**

1. A battery beading device comprising:

   a fixing part inserted into an opening portion of a battery case and configured to fix the battery case;
   a beading part comprising a knife configured to form a bead by pressing an outer surface of the battery case, a main body configured to allow the knife to move forward or backward, and a connection portion configured to connect the knife and the main body; and
   a distance calculation unit configured to calculate a distance between the knife and the fixing part or a distance between the knife and the main body.

2. The battery beading device of claim 1, wherein

   the distance calculation unit comprises a first coil, a second coil, a current supply unit, and a magnetic field measurement unit,
   the first coil is fixed to a side surface of at least one of the connection portion and the knife, and the second coil is fixed to one surface of at least one side of the fixing part and the main body,
   the current supply unit is configured to supply current to the first coil and the second coil, and the magnetic field measurement unit is connected to one of the first coil and the second coil to measure a magnetic field between the first coil and the second coil.

3. The battery beading device of claim 1, wherein the beading part is provided in plural around the fixing part.

4. The battery beading device of claim 1, further comprising a control unit in which a reference value for the distance between the knife and the fixing part or the distance between the knife and the main body is stored, the control unit being configured to determine a defect when data calculated by the distance calculation unit exceeds the reference value.

5. The battery beading device of claim 4, wherein the control unit moves the knife backward when the data calculated by the distance calculation unit exceeds the reference value.

6. The battery beading device of claim 1, further comprising a control unit in which a reference value for the distance between the knife and the fixing part or the distance between the knife and the main body is stored, the control unit being configured to further advance the knife when data calculated by the distance calculation unit falls below the reference value.

7. The battery beading device of claim 1, wherein the fixing part comprises an accommodation groove configured to accommodate the knife when the knife forms a bead on the battery case.

8. The battery beading device of claim 1, wherein the fixing part rotates the battery case when the knife presses the outer surface of the battery case.

9. A method for manufacturing a battery case by forming a bead on the battery case using the battery beading device of any one of claims 1 to 8, the method comprising:

    introducing a fixing part into an opening portion of the battery case and fixing the battery case to the fixing part;
    advancing, by a main body coupled to a knife, the knife toward the battery case, thereby pressing an outer surface of the battery case with the knife;
    calculating a distance between the knife and the fixing part or a distance between the knife and the main body; and
    rotating the fixing part to form a bead on the battery case.

10. The method of claim 9, wherein the calculating the distance involves further advancing, by a control unit, the knife when the calculated distance falls below a reference value.

11. The method of claim 9, wherein the calculating the distance involves determining, by a control unit, that the bead is defective when the calculated distance exceeds a reference value, and adjusting, by the control unit, an advancing distance of the knife.

12. A method for manufacturing a secondary battery, the method comprising:

    preparing the battery case of claim 9; and
    manufacturing a secondary battery by seating a cap assembly on the bead and then crimping the battery case.

13. The method of claim 12, wherein the preparing the battery case comprises manufacturing an electrode assembly by winding a negative electrode, a separator, and a positive electrode, and introducing the electrode assembly and an electrolyte solution into the battery case, before fixing the battery case.

[Figure 1]

[Figure 2]

[Figure 3]

[Figure 4]

[Figure 5]

INTRODUCING FIXING PART INTO OPENING PORTION OF BATTERY CASE AND FIXING SECONDARY BATTERY TO FIXING PART — S10

⇩

ADVANCING, BY MAIN BODY COUPLED TO KNIFE, KNIFE IN DIRECTION IN WHICH BATTERY CASE IS LOCATED, THEREBY PRESSING OUTER SURFACE OF BATTERY CASE WITH KNIFE — S20

⇩

CALCULATING DISTANCE BETWEEN KNIFE AND FIXING PART OR DISTANCE BETWEEN KNIFE AND MAIN BODY — S30

⇩

ROTATING FIXING PART TO FORM BEAD ON BATTERY CASE — S40

## INTERNATIONAL SEARCH REPORT

| International application No. |
| --- |
| **PCT/KR2025/008391** |

**A. CLASSIFICATION OF SUBJECT MATTER**

**H01M 50/167**(2021.01)i; **G01B 7/02**(2006.01)i; **B21D 51/26**(2006.01)i; **H01M 10/04**(2006.01)i

According to International Patent Classification (IPC) or to both national classification and IPC

**B. FIELDS SEARCHED**

Minimum documentation searched (classification system followed by classification symbols)

H01M 50/167(2021.01); B21D 17/04(2006.01); B21D 43/00(2006.01); B60L 11/18(2006.01); H01M 10/48(2006.01); H01M 50/10(2021.01); H01M 50/166(2021.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지 케이스(battery case), 비딩(beading), 나이프(knife), 거리 산출부(distance calculation unit)

**C. DOCUMENTS CONSIDERED TO BE RELEVANT**

| Category* | Citation of document, with indication, where appropriate, of the relevant passages | Relevant to claim No. |
| --- | --- | --- |
| Y | CN 214919509 U (WUHAN YIFEI LASER CO., LTD.) 30 November 2021 (2021-11-30)<br>see paragraphs [32]-[34] and figures 1-4. | 1-13 |
| Y | KR 10-2023-0108419 A (LG ENERGY SOLUTION, LTD.) 18 July 2023 (2023-07-18)<br>see paragraphs [4]-[47] and figure 3. | 1-13 |
| Y | JP 3586955 B2 (UMITOMO WIRING SYST. LTD.) 10 November 2004 (2004-11-10)<br>see claim 4. | 2 |
| A | KR 10-2024-0087578 A (LG ENERGY SOLUTION, LTD.) 19 June 2024 (2024-06-19)<br>see paragraphs [40]-[43] and figures 3-7. | 1-13 |
| A | KR 10-2022-0033187 A (LG ENERGY SOLUTION, LTD.) 16 March 2022 (2022-03-16)<br>see paragraph [43] and figures 1-4. | 1-13 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 September 2025** | **30 September 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

### INTERNATIONAL SEARCH REPORT
**Information on patent family members**

International application No.

**PCT/KR2025/008391**

| Patent document cited in search report | | | Publication date (day/month/year) | Patent family member(s) | | | Publication date (day/month/year) |
|---|---|---|---|---|---|---|---|
| CN | 214919509 | U | 30 November 2021 | None | | | |
| KR | 10-2023-0108419 | A | 18 July 2023 | None | | | |
| JP | 3586955 | B2 | 10 November 2004 | DE | 69711963 | T2 | 28 November 2002 |
| | | | | DE | 69714879 | T2 | 08 May 2003 |
| | | | | EP | 0788211 | A2 | 06 August 1997 |
| | | | | EP | 0788211 | A3 | 04 February 1998 |
| | | | | EP | 0788211 | B1 | 28 August 2002 |
| | | | | EP | 0788212 | A2 | 06 August 1997 |
| | | | | EP | 0788212 | A3 | 04 February 1998 |
| | | | | EP | 0788212 | B1 | 17 April 2002 |
| | | | | EP | 1061631 | A1 | 20 December 2000 |
| | | | | JP | 09-102329 | A | 15 April 1997 |
| | | | | JP | 09-102429 | A | 15 April 1997 |
| | | | | JP | 09-213378 | A | 15 August 1997 |
| | | | | JP | 09-215211 | A | 15 August 1997 |
| | | | | JP | 3772997 | B2 | 10 May 2006 |
| | | | | US | 5821731 | A | 13 October 1998 |
| | | | | US | 5850135 | A | 15 December 1998 |
| KR | 10-2024-0087578 | A | 19 June 2024 | CN | 118541857 | A | 23 August 2024 |
| | | | | EP | 4468474 | A1 | 27 November 2024 |
| | | | | JP | 2025-526517 | A | 14 August 2025 |
| | | | | WO | 2024-128754 | A1 | 20 June 2024 |
| KR | 10-2022-0033187 | A | 16 March 2022 | KR | 10-2745036 | B1 | 19 December 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240167132